Europäisches Patentamt

European Patent Office

Office européen des brevets

(11) Publication number: **0 117 955**
A1

# EUROPEAN PATENT APPLICATION

(21) Application number: **83307872.8**

(22) Date of filing: **22.12.83**

(51) Int. Cl.³: **A 23 L 1/16**

(30) Priority: **24.02.83 JP 28559/83**
**24.02.83 JP 25043/83**

(43) Date of publication of application:
**12.09.84 Bulletin 84/37**

(84) Designated Contracting States:
**CH DE FR GB LI NL**

(71) Applicant: **Showa Sangyo Kabushiki Kaisha**
**2-1 Uchi-Kanda 2-chome Chiyoda-ku**
**Tokyo(JP)**

(72) Inventor: **Ishikawa, Hiroaki**
**6-50-12, Kita-Koiwa Edogawa-ku**
**Tokyo(JP)**

(72) Inventor: **Kanaya, Masaya**
**718-24, Shikawatashi Yotsukaido-shi**
**Chiba-ken(JP)**

(74) Representative: **Dixon, Donald Cossar et al,**
**Gee & Co. Chancery House Chancery Lane**
**London WC2A 1QU(GB)**

(54) Pasta food and process for the preparation thereof.

(57) Pasta foods such as macaroni, spaghetti and the like which have color and aroma of specified natural fruit, and a process for the preparation thereof, are disclosed.

The process comprises mixing natural fruit juice with wheat flour and other components for preparing pasta, and subjecting the mixture to a pasta-making process.

EP 0 117 955 A1

## PASTA FOOD AND PROCESS FOR THE PREPARATION THEREOF

The present invention relates to pasta foods having color and aroma of specified natural fruit,and a process for the preparation thereof.

Pasta foods such as macaroni, spaghetti, lasagna, ravioli and the like are the most popular Italian foods and the consumption is increasing in recent days,especially in Japan. Usually they have white to amber color and a slight flavor;both originate from the nature of raw material, i.e. semolina of Durum wheat, farina of hard wheat, etc., and therefore, the appearance of such pasta foods is rather unattractive, although there are various shapes called elbow, wheel, shell,etc., for macaroni.

Colored pasta with some vegetables, e.g. tomato, carrot, spinach, etc., are also sold commonly in food markets. However their color and smell are not so impressive, and pasta food having beautiful color as well as sweet smell is unknown.

The principal object of the invention is, therefore, to prepare pasta foods having an attractive appearance and sweet smell which are acceptable for modern human taste and are able to extend the variety of modern cuisine.

A specific object of the invention is to provide a process for the preparation of pasta foods having color and aroma of specified natural fruit.

Another object of the invention is to provide pasta foods per se,to be obtained by the process.

According to the invention, pasta foods are prepared by mixing natural fruit juice as one of the raw material with wheat flour, adjusting the moisture content of the mixture, and subjecting the resultant mixture to conventional pasta-making steps such as extruding, drying, cutting, etc.

Any type of fruit juice such as concentrated juice, powdered juice, pastes, purée, etc.,are useful for this purpose.

Various fruits such as strawberry, orange, mandarin orange, apple, pineapple, grape, apricot, melon, lemon, etc.,are suitable sourcesof juices for giving colors and aroma of natural fruits to pasta foods but are not limited to them. Fruit being rich in color and aroma is of course preferable for the purpose of this invention.

The amount of fruit juices varies depending on the type of juice, the amount of solid contained therein, etc. Usually the amount is within a range of 0.1 to 50 parts to 100 parts of wheat flour in case of powdered juice having about 5% moisture content. In case of fresh juice, concentrated juice and paste, the amount should be determined considering the water content of the juice as a part of the entire quantity of water to be added to the raw materials for the preparation of pasta food, and usually, the amount varies from 0.5 to 100 parts to 100 parts of wheat flour. Liquid juice may be used together with dried product. It is natural that the amount of juice varies within very wide range according to the desired extent of color and aroma of the product, since the product of this invention is fastidious.

Another additives such as coloring materials, flavors, organic acids, sweeteners, emulsifiers, preservatives, etc., may be used optionally for the purpose of emphasising the effect of fruit juices.

Essence of fruits and natural colorants are among the flavors and coloring materials used for emphasize the color and aroma of juices. Usually 2 parts and less to 100 parts of flour is sufficient for this purpose, although it will vary according to the kind of the additives and the necessary strength of color and aroma.

Organic acids and sweeteners are used for improved taste and flavor, and they often perform taste of fresh fruit by a synergistic effect with aroma of juice. Citric, tartaric, malic, ascorbic acids and their salts are organic acids generally used in an amount 0.1 to 3 parts to 100 parts of flour.

As to sweeteners, natural sugars such as dextrose, fructose, sugar alcohols such as sorbitol, maltitol; starch hydrolyzates such as dextrin, starch syrup; natural or artificial sweeteners such as stevioside, aspartame, may be listed. The amount of sweeteners may vary within a wide range due to the kind and nature; however 0.1 to 5 parts to 100 parts of flour is usually used in case of dextrose, fructose and the like. The approximate amount for other sweeteners will be able to be determined, considering the above.

Preservatives and emulsifiers may be used by the known amount and usage. Emulsifiers, for example, improve appearance and mouth feel of pasta products in cooperation with flavor and taste of juice and another additives besides its known anti-retrogradation effect.

These additives may be added to fruit juice previously or be added together with another raw materials directly into flour.

Pasta foods obtained by this invention have various color and aroma of natural fruit according to juices used. The products may be offered in dried state or in semi-moist state for which drying step is omitted. A transparent packing of colored dried products, i.e., dried macaroni, is very fanciful goods. Pasta foods of this invention can cook in conventional manner, and different aromas do not mingle when pasta having different aromas are boiled together. Each specific color also do not disappear by boiling, and therefore, each specific color and aroma of natural fruit are enjoyable in various dishes using the product of this invention.

The invention will now be further explained with reference to Examples.

Example 1

Shell type macaroni was prepared in conventional manner using the following components.

| Components | Parts |
|---|---|
| Wheat flour (semolina of Durum wheat) | 20 |
| Wheat flour (Hard wheat flour) | 80 |
| *Concentrated fruit juice | 10 $\sim$ 20 |
| (50 $\sim$ 80% moisture) | |
| Water | 14 $\sim$ 25 |

* Strawberry, orange, grape, apricot and melon juices were used. Each amount of juices were different since their moisture was not same. The amounts were adjusted so as to the whole water content of the raw material is 30%.

The products were beautiful with colors and aromas of each fruit juices. A transparent package of these products were some like drops and were fanciful. Colors and aromas did not disappear or mingle when the products were boiled together with for about 20 minutes in a conventional manner.

Example 2

Spaghetti was prepared in conventional manner using the following components.

| Components | Parts |
| --- | --- |
| Wheat flour (semolina of Durum wheat) | 40 |
| Wheat flour (Farina of hard wheat) | 60 |
| Dried fruit juice (orange) | 1 |
| Essence of orange | 0.5 |
| Citric acid | 0.5 |
| Dextrose | 1 |
| Water | 30 |

Spaghetti obtained was rich in color and aroma of orange.

Example 3

Coating of ravioli was prepared in conventional manner using the following components. The product remained semi-moist state omitting drying step.

| Components | Parts |
| --- | --- |
| Wheat flour (semolina of Durum wheat) | 30 |
| Wheat flour (semi-hard wheat flour) | 70 |
| Grape juice (90% moisture) | 1 |
| Natural colorant (cotinyl) | 0.2 |
| Essence of grape | 0.2 |
| Citric acid | 0.5 |
| Sugar ester | 0.2 |
| Dextrose | 0.8 |
| Water | 21 |

The product obtained was rich in color and aroma of grape and they were not changed after storing 6 months under -18°C.

## CLAIMS

1. Pasta food characterized by having color and aroma of natural fruit.

2. A process for the preparation of pasta food, characterized by mixing natural fruit juice with wheat flour and another components necessary for preparing pasta food, and subjecting the resultant mixture to conventional pasta-making process.

3. A process as claimed in Claim 1, wherein said fruit juice is selected from the group consisting of fresh juice, concentrated juice, dried juice, purée and paste.

4. A process as claimed in Claim 1 or 2, wherein at least one of coloring matter, essence of fruit, sweetener, emulsifier and preservative is added in an addition to fruit juice.

5. Pasta food whenever prepared by a process as claimed in any of Claims 2 to 4.

6. The features herein described, or their equivalents, in any patentably novel selection.

**0117955**

Application number

# EUROPEAN SEARCH REPORT

European Patent Office

EP  83 30 7872

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 605 250  (A. LAMMERS)  * Claims 1-3 * | 1,3,4 6 | A 23 L    1/16 |
| X | FR-A-1 031 520  (L. MATTICOLA)  * Abstract;  page 1, column 1, paragraph 5 * | 1-6 | |
| X | FR-A-1 245 749  (B. DELLA MASSA)  * Abstract, points 1,2,5; page 2, column 1, lines 20-23; example * | 1-6 | |
| X | FR-A- 926 192  (A. ANDRE)  * Abstract * | 1-6 | |

---

| | | | TECHNICAL FIELDS SEARCHED (Int. Cl. ³) |
|---|---|---|---|
| | | | A 23 L |

The present search report has been drawn up for all claims

| Place of search | Date of completion of the search | Examiner |
|---|---|---|
| THE HAGUE | 25-05-1984 | DESMEDT G.R.A. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503. 03.82